# EUROPÄISCHE PATENTSCHRIFT

(11) **EP 4 127 629 B1**
(45) Veröffentlichungstag und Bekanntmachung des Hinweises auf die Patenterteilung: **21.05.2025**
(21) Anmeldenummer: 21715813.8
(22) Anmeldetag: 23.03.2021
(51) Int. Cl.: G01K 1/08, G01K 1/14, G01K 13/00, G01K 13/02

(54) **THERMOMETER FÜR KRYOGENE ANWENDUNGEN**
THERMOMETER FOR CRYOGENIC APPLICATIONS
THERMOMÈTRE POUR DES APPLICATIONS CRYOGÉNIQUES

(30) Priorität: 03.04.2020 DE 102020109424
(43) Veröffentlichungstag der Anmeldung: 08.02.2023
(73) Patentinhaber: Endress+Hauser Wetzer GmbH+Co. KG, 87484 Nesselwang (DE)
(72) Erfinder: VAN DER BEEK, Mijndert, 3311DT Dordrecht (NL); SAECKER, Dietmar, 87484 Nesselwang (DE); FRIES, Michael, 87616 Marktoberdorf (DE)
(74) Vertreter: Endress + Hauser Group Services (Deutschland) AG+Co. KG
(86) Internationale Anmeldenummer: PCT/EP2021/057441
(87) Internationale Veröffentlichungsnummer: WO 2021/197930

(56) Entgegenhaltungen:
- DE-A1- 102005 002 383
- DE-A1- 102011 089 942
- DE-A1- 3 516 815

## Beschreibung

Die vorliegende Erfindung betrifft eine Anordnung zur Bestimmung und/oder Überwachung einer Temperatur eines Mediums in einem Messrohr.

Thermometer sind in unterschiedlichsten Ausgestaltungen aus dem Stand der Technik bekannt geworden und deren zugrundeliegende Messprinzipien sind jeweils ebenfalls ausführlich beschrieben worden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Strahlungsthermometern, insb. Pyrometern, zur Bestimmung der Temperatur einer Substanz deren Wärmestrahlung ausgenutzt.

Bei einem Temperatursensor in Form eines sogenannten Dünnschicht-Sensors, insbesondere eines Resistance Temperature Detectors (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden dabei sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich. Die Temperatursensoren sind häufig Teil eines Messeinsatzes, welcher beispielsweise in einen in das Medium eintauchenden Eintauchkörper, bzw. ein Schutzrohr, einbringbar ist. Das Schutzrohr erfüllt dann im Prinzip die Funktion eines Gehäuses, das den Messeinsatz vor der Umgebung, z.B. aggressiven Medien, Kräften und/oder hohen Drücken und/oder Temperaturen im jeweiligen Prozess, schützt. Die Schutzrohre wiederum werden typischerweise in einen Rohrstutzen eines Behältnisses oder eines Messrohrs eingebracht.

Thermometer in Rohrleitungen sind grundsätzlich der Strömung des jeweiligen Mediums ausgesetzt, wodurch sich unterschiedliche Probleme ergeben können. Dabei spielt unter anderem die jeweilige Einbausituation eine Rolle. Die Thermometer werden beispielsweise häufig in geraden Abschnitten der jeweiligen Rohrleitung so in dieselbe eingebaut, dass eine Längsachse durch das Thermometer im Wesentlichen senkrecht zur Strömungsrichtung des Mediums verläuft. Alternativ ist es auch bekannt geworden, Thermometer in einem gekrümmten Bereich der Rohrleitung anzuordnen. Die Strömung des Mediums ist dann jeweils für unterschiedliche mechanische Kräfte verantwortlich, die auf das Thermometer wirken, z. B. Scherkräfte oder Kräfte, die durch eine Wirbelablösung induziert werden und eine wirbelinduzierte Schwingung des Thermometers bewirken können.

Die Vortexbildung wird in der Strömungslehre auch als "Kärmänsche-Wirbelstraße" bezeichnet. Es handelt sich um ein sich wiederholendes Muster von wirbelnden Strudeln in unterschiedliche Richtungen, die durch die unstetige Separation der Strömung eines Mediums um einen Körper herum verursacht werden und welche diesen Körper in Schwingungen versetzen. Je näher die Frequenz der Schwingungen an der Eigenfrequenz des Körpers liegt, den das Medium umströmt, desto mehr Schwingungen werden induziert. Die Frequenz der Schwingungen wird z. B. durch Prozessparameter wie die physikalischen Eigenschaften des Mediums, die Strömungsgeschwindigkeit und die Form des Thermometers bestimmt.

Eine Wirbelablösung kann im schlimmsten Fall zu einer Beschädigung des Thermometers oder führen. Zumindest wird jedoch hierdurch die Betriebs- bzw. Lebensdauer des Thermometers reduziert. So muss die Möglichkeit einer Vortexbildung bei der Entwicklung eines Thermometers für den Einsatz in einem strömenden Medium gebührend berücksichtigt werden. Heute stehen normierte Standardmethoden, wie z.B. ASME PTC 19.3 TW-2010 oder DIN43772, zur Verfügung, die verschiedene Gestaltungsregeln für Thermometer definieren. Anhand dieser Methoden ist auch eine Überprüfung des Designs des Thermometers hinsichtlich dessen Empfindlichkeit gegenüber einer Vortexbildung möglich. Die verfügbaren Methoden sind jedoch stets auf bestimmte Thermometerbauformen und/oder Prozessbedingungen begrenzt.

Grundsätzlich gilt es, eine Eigenfrequenz des Thermometers und die Eigenfrequenz der Wirbelablösung voneinander zu separieren. So kann die Wahrscheinlichkeit des Auftretens des gefährlichen Zustands von resonanten wirbelinduzierten Schwingungen des Thermometers minimiert werden. Um eine derartige Separation der Frequenzen zu erreichen, kann beispielsweise die Geometrie des Thermometers variiert werden, z. B. durch Verringerung der Länge des Thermometers, durch Vergrößerung des Durchmessers, und/oder durch eine vergleichsweise große Wanddicke des Schutzrohrs.

Alternativ, wenn funktionelle Einschränkungen bestimmte Änderungen der Abmessungen des Thermometers nicht zulassen, werden teilweise auch mechanische Halterungen oder Absorber verwendet, um die Empfindlichkeit des Thermometers gegenüber einer Wirbelablösung zu verringern. Diese mechanischen Halterungen oder Absorber werden normalerweise in einen Spalt zwischen dem Rohrstutzen oder dem Rohr und der Außenfläche des Thermometers eingebaut. Die Halterungen oder Absorber erhöhen dann die Eigenfrequenz des Thermometers, indem sie die freie Länge des Thermometers verringern. Es erweist sich jedoch als schwierig, die Halterungen oder Absorber so zu montieren, dass ein hoher Grad an Kopplung und damit der gewünschte Effekt erreicht werden kann. Eine weitere Problematik besteht darin, dass eine feste Position der Halterung bzw. des Absorbers innerhalb des Prozesses aufgrund unterschiedlicher Wärmausdehnungskoeffizienten der unterschiedlichen Komponenten des Thermometers nicht garantiert werden kann. Aus diesem Grunde entspricht momentan eine entsprechende Ausgestaltung eines Thermometers mit einer Halterung bzw. einem Absorber beispielsweise nicht den Anforderungen der Norm ASME PTC 19.3 TW-2010. Die DE 102005 002 383 A1 offenbart einen Befestigungseinsatz, der in einen Rohrstutzen geschoben wird, derart dass ein Stift in einer Öffnung des Rohrstutzens arretiert wird, wodurch der Befestigungseinsatz in dem Rohrstutzen nicht drehbar ist.

Die DE 102011 089 942 A1 offenbart eine Aufnahmevorrichtung für einen Messeinsatz zur Messung der Temperatur. Die Aufnahmevorrichtung weist ein Formteil zur Befestigung der Aufnahmevorrichtung an einer Rohrleitung auf. Ein Federelement drückt den Messeinsatz in die Aufnahmevorrichtung.

Die DE 35 16815 A1 offenbart ein Thermometer für einen unter erhöhter Temperatur und Überdruck betriebenen Reaktionsraum. Mithilfe eines Handrades kann das Thermometer in Richtung der Reaktionskammer und wieder daraus hinaus geschoben werden.

Für kryogene Anwendungen, also für den Einsatz bei tiefen Temperaturen, ist es in Bezug auf die thermischen Eigenschaften des Thermometers und in Bezug auf dessen Messgenauigkeit bzw. zur Reduktion von Wärmeableitfehlern, von Vorteil, wenn das Thermometer lang ist und über einen möglichst geringen Durchmesser verfügt. Auch ist es von Vorteil, die Wandung des jeweils verwendeten Schutzrohrs möglichst dünn auszugestalten. Eine derartige Konstruktion ist jedoch, wie oben beschrieben, besonders nachteilig in Bezug auf vortex induzierte Schwingungen des Thermometers.

Der Erfindung liegt die Aufgabe zugrunde, dieser Problematik zu begegnen und ein Thermometer bereitzustellen, welches auch für die Erfassung tiefer Temperaturen von strömenden Medien bestens geeignet ist.

Diese Aufgabe wird gelöst durch die Anordnung nach Anspruch 1. Vorteilhafte Ausgestaltungen sind jeweils in den abhängigen Ansprüchen angegeben.

Hinsichtlich der Anordnung wird die der Erfindung zugrunde liegende Aufgabe gelöst durch eine Anordnung zur Bestimmung und/oder Überwachung einer Temperatur eines Mediums in einem Messrohr, umfassend ein Thermometer für kryogene Anwendungen, wobei das Thermometer einen Messeinsatz mit einem Temperatursensor und ein Schutzrohr zur Aufnahme des Messeinsatzes aufweist, und einen Befestigungseinsatz, wobei der Befestigungssatz zur Befestigung des Thermometers in einem Rohrstutzen eines Messrohrs ausgebildet ist, umfassend- ein Halteelement zur Befestigung des Thermometers an dem Befestigungseinsatz, und- eine Arretierung, welche dazu ausgestaltet ist, eine Rotationsbewegungrelativ zum Messrohr zu verhindern.

Erfindungsgemäß ist zumindest eine Komponente des Befestigungseinsatzes derart ausgestaltet und/oder angeordnet, dass der Befestigungseinsatz in Richtung einer Längsachse des Rohrstutzens derart beweglich ist, dass Temperatureffekte aufgrund unterschiedlicher Wärmausdehnungskoeffizienten von unterschiedlichen Komponenten des Thermometers kompensierbar sind.

Durch die Beweglichkeit des Befestigungseinsatzes parallel zur Längsachse werden also Temperatureffekte aufgrund unterschiedlicher Ausdehnungskoeffizienten kompensiert.

Gleichzeitig ist das Halteelement starr mit dem Thermometer verbunden, so dass stets eine ausreichende mechanische Kopplung zur Verringerung der Wahrscheinlichkeit des Auftretens von wirbelinduzierten Schwingungen besteht. Es ist ein Vorteil der vorliegenden Erfindung, dass eine ausreichende Stabilität bezüglich des Befestigungseinsatzes bei gleichzeitiger Kompensation auftretender Temperatureffekte erreicht werden kann. Die Verwendung eines erfindungsgemäßen Befestigungseinsatzes erlaubt also, das jeweilige Thermometer in Bezug auf dessen thermische Eigenschaften zu optimieren. Beispielsweise kann das Thermometer lang ausgeführt sein und es kann eine dünne Wandung des Schutzrohrs gewählt werden. Der Befestigungseinsatz ist also vorzugsweise einsetzbar im Bereich kryogener, d.h. niedriger Temperaturen.

In einer Ausgestaltung umfasst der Befestigungseinsatz ferner einen Grundkörper mit einer Durchgangsöffnung zur Aufnahme des Thermometers, wobei eine äußere Wandung des Grundkörpers an die geometrischen Dimensionen einer inneren Wandung des Rohrstutzens angepasst ist. Der Grundkörper dient quasi als Adapter zwischen dem Rohrstutzen und zumindest einer weiteren Komponente der Befestigungseinheit. Vorzugsweise ist der Grundkörper derart ausgestaltet, dass er in einer definierten Position relativ zu einer inneren Wandung des Rohrstutzens einbringbar ist. Es ist von Vorteil, wenn der Grundkörper kraft- und/oder stoffschlüssig, mit dem Behälterstutzen verbindbar ist. Beispielsweise kann der Grundkörper mittels einer Schweißung oder ähnlichem an der Innenwandung des Rohrstutzens befestigt werden.

Es ist ferner von Vorteil, wenn der Grundkörper in Form eines Hohlzylinders ausgestaltet ist. Auf diese Weise kann die Symmetrie des Rohrstutzens, welche üblicherweise ebenfalls zylindrisch ist, beibehalten werden.

In einer Ausgestaltung umfasst der Befestigungseinsatz ein ringförmiges Federelement, welches, insbesondere lösbar, in den Rohrstutzen oder in den Grundkörper einsetzbar ist.

Das Federelement ist insbesondere derart dimensioniert, dass es mit einer vorgebbaren Federspannung in den Rohrstutzen oder in den Grundkörper einsetzbar ist. Das Federelement kann sich somit in Abhängigkeit der Temperaturverhältnisse an unterschiedliche Ausdehnungen oder Kontraktionen unterschiedlicher Komponenten des Befestigungseinsatzes, des Thermometers und/oder des Rohrstutzens anpassen und entsprechend unterschiedliche mechanische Ausdehnungen oder Kontraktionen der unterschiedlichen Komponenten infolge unterschiedlicher Wärmeausdehnungskoeffizienten kompensieren.

In einer weiteren Ausgestaltung des Befestigungseinsatzes weist die Arretierung ein längliches Führungselement auf, welches an einer Wandung des Rohrstutzens oder des Grundkörpers befestigt ist, und welche Arretierung in eine Komponente des Befestigungseinsatzes eingreift, wenn der Befestigungseinsatz in den Rohrstutzen eingebracht ist. Die Arretierung ist vorzugsweise kraft und/oder stoffschlüssig mit der Wandung des Rohrstutzens oder des Grundkörpers verbunden, beispielsweise ist die Arretierung mit der jeweiligen Wandung verschweißt.

Zumindest eine Komponente des Befestigungseinsatzes, welche in den Rohrstutzen oder in den Grundkörper eingebracht wird, weist dann beispielsweise eine Aussparung, einen Schlitz, oder eine Aufnahme auf, in welche die Arretierung eingreift, wenn der Befestigungseinsatz montiert ist.

So ist es in einer Ausgestaltung der Erfindung von Vorteil, wenn das Federelement einen länglichen Schlitz aufweist, wobei das Führungselement derart an einer Wandung des Rohrstutzens oder des Grundkörpers befestigt ist, dass das Führungselement in den Schlitz eingreift, wenn das Federelement in dem Rohrstutzen oder in dem Grundkörper angeordnet ist. Das Führungselement ist vorzugsweise derart in dem Rohrstutzen oder in dem Grundkörper befestigt, dass eine Längsachse des Führungselements parallel zu einer Längsachse des Rohrstutzens ist. Eine Länge des Führungselements ist insbesondere an die jeweiligen thermischen Ausdehnungskoeffizienten und/oder an die zu erwartenden mechanischen Ausdehnungen und/oder Kontraktionen der unterschiedlichen Komponenten infolge von Temperaturänderungen angepasst.

Eine alternative Ausgestaltung beinhaltet, dass die Arretierung einen Gewindebolzen umfasst. Der Gewindebolzen weist zumindest einen ersten Teilbereich mit einem Gewinde, welcher der Befestigung an dem Grundkörper oder dem Rohrstutzen dient, und einen zweiten, gewindefreien Teilbereich auf. Vorzugsweise ist der Gewindebolzen parallel zu einer Längsachse des Rohrstutzens ausgerichtet. Der Gewindebolzen kann aber zudem auch optional einen dritten Teilbereich umfassen, welcher ebenfalls mit einem Gewinde versehen ist. Vorzugsweise sind dann der erste und dritte Teilbereich in den zwei Endbereichen des Gewindebolzens angeordnet.

Zumindest die Komponente des Befestigungseinsatzes, welche derart ausgestaltet und/oder angeordnet ist, dass der Befestigungseinsatz in Richtung einer Längsachse durch den Rohrstutzen beweglich ist, umfasst dann eine Durchgangöffnung, durch welche der Gewindebolzen geführt ist, und welche im zweiten Teilbereich des Gewindebolzens angeordnet ist.

In einer Ausgestaltung mit einer Arretierung umfassend einen Gewindebolzen weist der Grundkörper eine ringförmige Bodenfläche auf, an welche Bodenfläche ein Stutzen mit einem Innengewinde zur Aufnahme des Gewindebolzens angebracht ist. Der Gewindebolzen wird in diesem Falle beispielsweise mit dem ersten Teilbereich in den Gewindebolzen eingeschraubt. Mittels der Schraubverbindung mit dem Grundkörper wird für diese spezielle Ausgestaltung die Arretierung gegenüber Rotationsbewegungen des Thermometers bewirkt.

In einer Ausgestaltung des Befestigungseinsatzes weist das Halteelement ein ringförmiges Element auf, in welchem das Thermometer befestigbar ist.

Zur Befestigung des Thermometers in dem ringförmigen Element kommen dabei alle dem Fachmann an sich bekannten Befestigungsweisen in Betracht, beispielsweise eine Schraubverbindung mit zueinander korrespondierenden Gewinden oder unter Verwendung einer Stellschraube.

In einer alternativen Ausgestaltung des Befestigungseinsatzes ist das Halteelement in Form eines zylindrischen Elements mit einer, insbesondere zentrischen, ersten Durchgangsbohrung ausgestaltet, in welcher ersten Durchgangsbohrung das Thermometer befestigbar ist, und wobei ein Außendurchmesser des zylindrischen Elements an einen Innendurchmesser des Rohrstutzens oder des Grundkörpers angepasst ist. Bei der ersten Durchgangsbohrung handelt es sich insbesondere um eine zentrische Durchgangsbohrung bezogen auf eine Querschnittsfläche des zylindrischen Elements, deren Innendurchmesser an einen Außendurchmessers des Thermometers angepasst ist.

Für die Ausgestaltung des Halteelements in Form eines zylindrischen Elements ist es von Vorteil, wenn das Halteelement zumindest eine zweite Durchgangsbohrung zur Herstellung eines fluidischen Kontakts zwischen einem Innenvolumen des Messrohrs und einem Innenvolumen des Thermometers umfasst. Bei der zweiten Durchgangsbohrung handelt es sich um eine exzentrische Durchgangsbohrung bezogen auf eine Querschnittsfläche des zylindrischen Elements.

Noch eine Ausgestaltung beinhaltet, dass das Halteelement kraftschlüssig und/oder stoffschlüssig mit dem Rohrstutzen, dem Grundkörper oder dem ringförmigen Federelement verbunden ist. In diesem Zusammenhang kommt sowohl eine lösbare als auch eine nicht lösbare Verbindung in Frage.

Für den Fall, dass der Befestigungseinsatz ein ringförmiges Federelement aufweist, beinhaltet eine Ausgestaltung, dass das Halteelement einen Steg umfasst, welcher Steg das Haltelement und das Federelement verbindet. Das Halteelement und das Federelement sind in dieser Ausgestaltung vorzugsweise stoffschlüssig und starr miteinander verbunden. Beispielsweise kann der Steg mittels zweier Schweißverbindungen mit dem Federelement und dem Halteelement verbunden sein.

Für den Fall, dass der Befestigungseinsatz einen Grundkörper aufweist und dass das Halteelement die Form eines zylindrischen Elements aufweist, beinhaltet eine alternative Ausgestaltung, dass der Grundkörper und das Halteelement vermittels einer Schraubverbindung miteinander verbindbar sind, insbesondere umfasst das Haltelement zumindest eine dritte Durchgangsbohrung, wobei das Halteelement und der Grundkörper vermittels des Gewindebolzens der Arretierung, mittels einer Schraube, oder mittels eines weiteren Gewindebolzens miteinander verbindbar sind.

In einer Ausgestaltung umfasst die Anordnung einen Druckentnahmestutzen. Über den Druckentnahmestutzen kann ferner ein Druck des Mediums in dem Messrohr ermittelt werden. Insbesondere für den Fall einer kryogenen Anwendung kann auf diese Art und Weise die Bereitstellung eines weiteren Anschlusses an den Prozess durch eine ggf. vorhandene Vakuumisolierung des Messrohrs vermieden werden, die ansonsten bei einer zusätzlichen Messstelle erforderlich wäre.

Es sei darauf verwiesen, dass die in Zusammenhang mit dem erfindungsgemäßen Befestigungseinsatz beschriebenen Ausgestaltungen mutatis mutandis auch auf die erfindungsgemäße Anordnung anwendbar sind und umgekehrt.

Die Erfindung und ihre vorteilhaften Ausgestaltungen werden anhand der nachfolgenden Figuren näher erläutert. Es zeigt:
Fig. 1 den Ursprung von vortexinduzierten Vibrationen,
Fig. 2 ein Thermometer mit einem Schutzrohr und einer mechanischen Halterung,
Fig. 3 eine erste Ausgestaltung eines Thermometers mit einem erfindungsgemäßen Befestigungseinsatz, und
Fig. 4 eine zweite Ausgestaltung eines Thermometers mit einem erfindungsgemäßen Befestigungseinsatz.

In den Figuren werden gleiche Elemente mit demselben Bezugszeichen versehen.

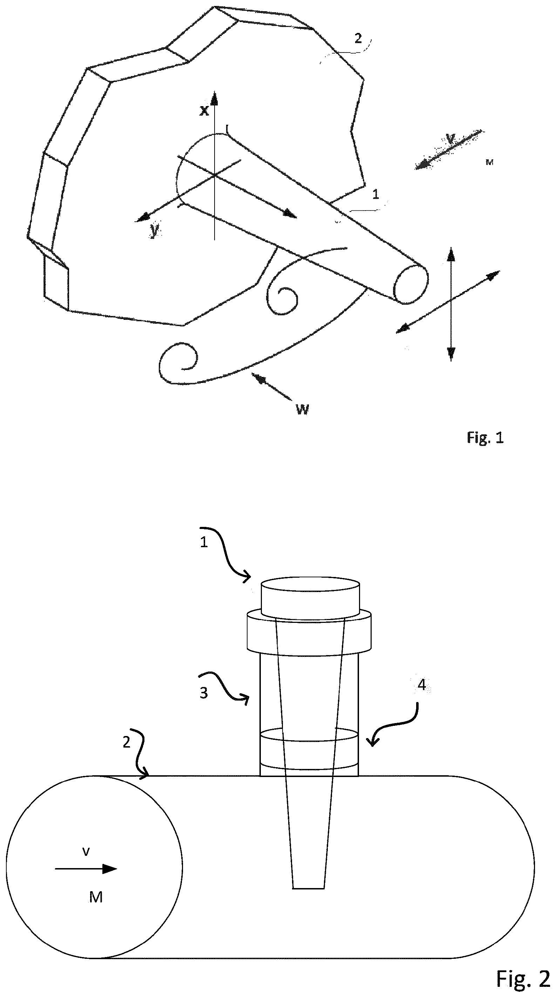

Fig. 1 veranschaulicht den Ursprung einer Wirbelablösung w an einem zylindrischen, konisch zulaufenden Thermometer 1, welches Thermometer in einem Rohr 2 einem strömenden Medium M ausgesetzt ist. Das Rohr 2 ist hier anhand seiner Wandungen dargestellt. In Strömungsrichtung v des Mediums M entwickelt sich hinter dem Thermometer 1 ein kammartiges Muster des Strömungsprofils. In Abhängigkeit von der Strömungsgeschwindigkeit v des Mediums M kann dies zu einer Wirbelablösung führen, die wiederum das Thermometer 1 in Schwingungen versetzen kann.

Diese Vibrationen werden hauptsächlich durch zwei Kräfte hervorgerufen, die auf das Thermometer 1 einwirken: eine Scherkraft in y-Richtung und eine Hubkraft in x-Richtung, welche sich zur strömungsbedingten Gesamtkraft F_{flow} addieren. Die Scherkraft verursacht Schwingungen mit einer Frequenz fs, während die Hubkraft Schwingungen mit einer Frequenz von 2fs verursacht. Die Frequenz fs hängt nun von der Strömungsgeschwindigkeit v des Mediums M und von verschiedenen physikalischen oder chemischen Eigenschaften des Mediums M wie seiner Viskosität und Dichte sowie von der Geometrie des Thermometers 1, wie seinem Durchmesser, seiner Länge und der Dicke der Wandungen des Schutzrohrs ab. Je näher die Frequenz fs an der Eigenfrequenz des Thermometers 1 liegt und je höher die Strömungsgeschwindigkeit v des Mediums M ist, desto größer sind die daraus resultierenden schwingungserzeugenden Kräfte. Durch das Einwirken dieser Kräfte bzw. durch das Auftreten einer Wirbelablösung kann das Thermometer 1 beschädigt werden. Im schlimmsten Falle kann es auch zu einem kompletten Ausfall des Thermometers 1 kommen. Dies wird als so genannte Resonanzbedingung bezeichnet.

Um die Empfindlichkeit von Thermometern gegenüber einer derartigen Vortexbildung zu reduzieren, kann, wie in der Einleitung beschrieben, das Design des Schutzrohrs angepasst werden. Nun ist es aber so, dass die Maßnahmen, die zur Optimierung der Geometrie des Thermometers 1 mit Hinblick auf Wirbelablösungen, und solche, die zur Optimierung des Thermometers 1 mit Hinblick auf Temperatureffekte, insbesondere hervorgerufen durch unerwünschte Wärmeableitungen, geboten sind grundsätzlich gegenläufig sind.

Eine weitere Möglichkeit, wirbelinduzierte Schwingungen des Thermometers 1 zu vermeiden, besteht in der Verwendung einer mechanischen Halterung 4, wie in Fig.2 illustriert. Die Halterung 4 wird in einen Rohrstutzen 3 des Messrohrs 2 eingebracht und erhöht die Eigenfrequenz des Thermometers 1, indem sie die freie Länge des Thermometers 1 verringert.

Problematisch bei derartigen mechanischen Halterungen 4 ist jedoch, dass sie nicht zu jedem Zeitpunkt eine ausreichende mechanische Kopplung zum Thermometer 1 gewährleisten können. Insbesondere mechanische Ausdehnungen der unterschiedlichen Komponenten der jeweiligen Anordnung in Folge unterschiedlicher Wärmeausdehnungskoeffizienten, die bei Temperaturänderungen auftreten, machen derartige Lösungen bisher unzuverlässig.

Diese Problematik löst die vorliegende Erfindung durch einen Befestigungseinsatz 6, welcher parallel zu einer Längsachse L durch den Rohrstutzen 3 beweglich ist. Durch diese Bewegung in Richtung der Längsachse können Temperatureffekte kompensiert werden, ohne die mechanische Kopplung zum Thermometer 1 zu beeinflussen.

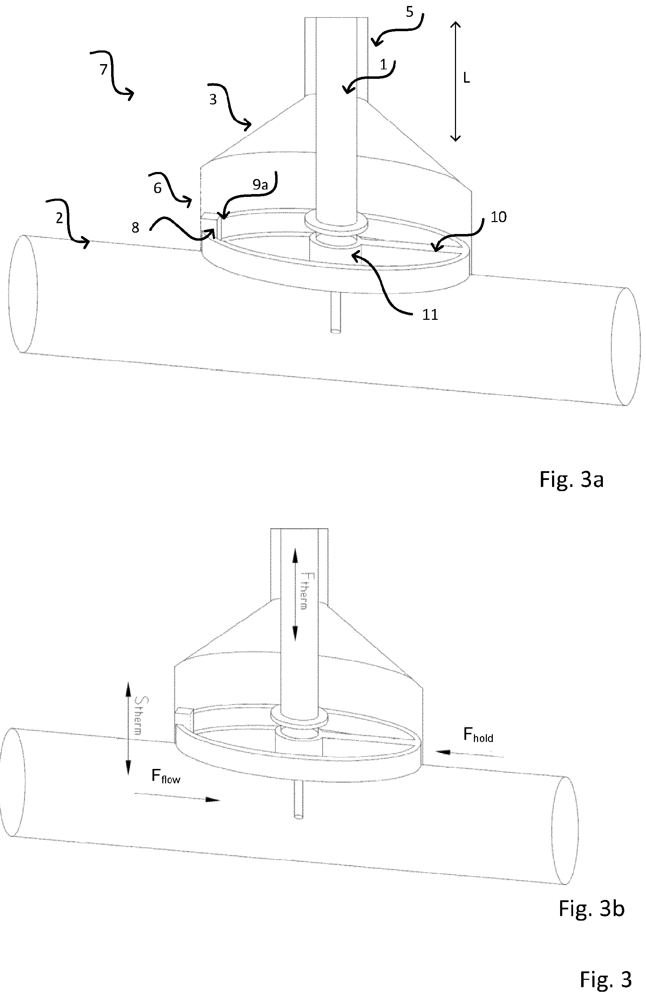

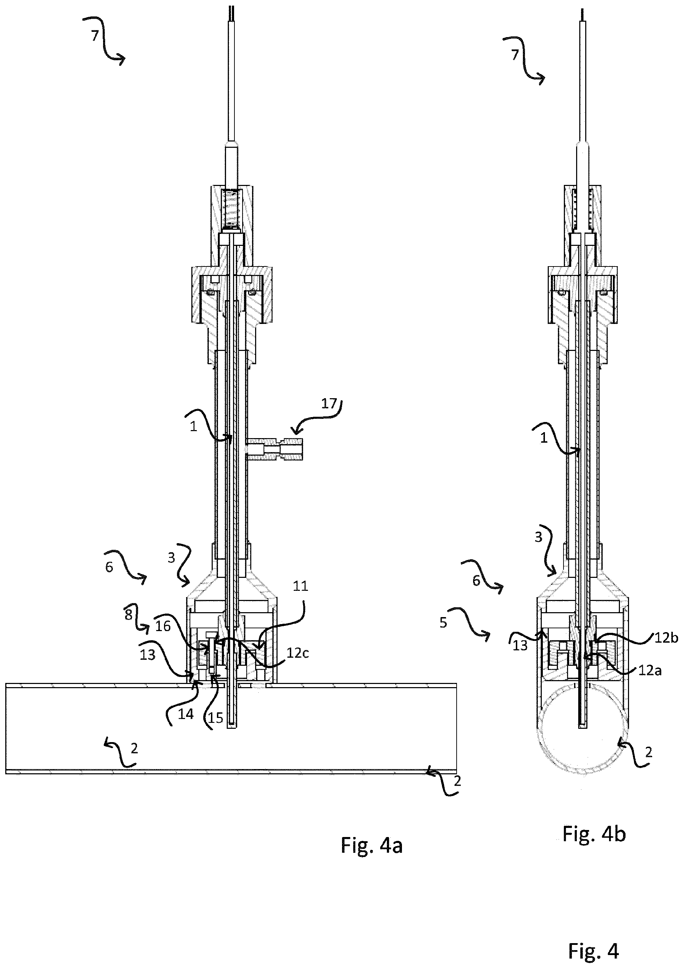

In den Figuren Fig. 3 und Fig. 4 sind zwei besonders bevorzugte Ausgestaltungen für einen erfindungsgemäßen Befestigungseinsatz 6 bzw. für erfindungsgemäße Anordnungen 7 dargestellt. Das Messrohr 2 und der Rohrstutzen 3 sind jeweils beispielhaft zur Verwendung bei tiefen Temperaturen T ausgestaltet und weisen beispielsweise eine hier nicht separat dargestellt Vakuumisolierung auf.

Für die Ausgestaltung gemäß Fig. 3 weist der Befestigungseinsatz 6 eine Arretierung 8 in Form eines länglichen Führungselements auf, welches mit der Innenwandung des Rohrstutzens 3 verschweißt ist, wie beispielsweise in Fig. 3a ersichtlich. Der Befestigungseinsatz 6 umfasst ferner ein ringförmiges Federelement 9, dessen geometrische Dimensionierung ebenfalls an die Abmessungen des Rohrstutzens 3 angepasst sind. Das Federelement 9 hat einen Schlitz 9a, in welchen die Arretierung 8 eingreift, wenn das Federelement 9 in dem Rohrstutzen 3 angeordnet ist. Das Federelement 9 ist ferner über den Steg 10 mit dem ringförmigen Halteelement 11 verbunden, welches der Befestigung des Thermometers 1 dient. Durch die Arretierung 8 wird eine Rotationsbewegung des Befestigungseinsatzes 6 relativ zum Rohrstutzen verhindert.

Eine Bewegung Sₜₕₑᵣₘ in Richtung einer Längsachse L des Rohstutzens ist dagegen möglich und dient der Kompensation von Temperatureffekten, welche dazu führen, dass thermisch induzierte Kräfte Fₜₕₑᵣₘ auf das Thermometer 1 und den Befestigungseinsatz 6 einwirken, wie in Fig. 3b illustriert. Solche Kräfte Fₜₕₑᵣₘ resultieren aus unterschiedlichen Ausdehnungskoeffizienten der jeweiligen Komponenten und den damit verbundenen unterschiedlichen mechanischen Ausdehnungen infolge von Temperaturänderungen. Die durch die Wandung des Rohrstutzens 3 und das Federelement bewirkten Kräfte F_{hold} dienen der Befestigung des Halteelements 11 an dem Thermometer 1, welches durch das Halteelement 11 wiederum eine reduzierte Empfindlichkeit gegenüber der durch die Strömung verursachten Kräfte F_{flow} führt, wie in Zusammenhang mit Fig. 1 beschrieben worden ist.

Eine zweite beispielhafte, besonders bevorzugte Ausgestaltung für einen erfindungsgemäßen Befestigungseinsatz 6 bzw. eine erfindungsgemäße Anordnung 7 ist in Fig. 4 in zwei gegeneinander um 90° rotierten Ansichten dargestellt. Wie aus Fig. 4a ersichtlich, weist der Befestigungseinsatz einen Grundkörper 13 in Form eines Hohlzylinders auf, welcher in den Rohrstutzen 3 fest eingebracht ist, beispielsweise ist der Grundkörper 13 in den Rohrstutzen 3 eingeschweißt. Der Grundkörper 13 verfügt ferner über eine ringförmige Bodenfläche 14, an welche Bodenfläche 14 ein Stutzen 15 mit einem Innengewinde zur Aufnahme des Gewindebolzens 16, welcher Teil der Arretierung 8 ist. Mittels des Gewindebolzens 16 ist der Grundkörper 13 kraftschlüssig mit dem Halteelement 11 verbunden, welches hier in Form eines zylindrischen Elements ausgestaltet ist. Das Halteelement 11 verfügt, wie in Fig. 4b sichtbar, über eine erste Durchgangsbohrung 12a zur Aufnahme des Thermometers 1, über eine zweite Durchgangsbohrung 12b zur Herstellung eines fluidischen Kontakts zwischen einem Innenvolumen des Messrohrs 2 und einem Innenvolumen des Thermometers 1, sowie eine dritte Durchgangsbohrung 12c zur Befestigung des Haltelements 11 mit dem Grundkörper 13 vermittels des Gewindebolzens 15.

Auch für die hier gezeigte Variante eines Befestigungseinsatzes ist eine Bewegung in Längsrichtung des Rohrstutzens 3 möglich, während eine Rotationsbewegung durch die Arretierung 8 verhindert ist. Entsprechend können, genau wie im Falle der Ausgestaltung gemäß Fig. 3, aus Temperatureffekten resultierende Kräfte Fₜₕₑᵣₘ und strömungsbedingte Kräfte F_{flow} kompensiert werden.

In der Ausgestaltung gemäß Fig. 4 umfasst die Anordnung 7 ferner einen Druckentnahmestutzen 17 zur Bestimmung eines Drucks des Mediums M. Dies wird ermöglicht durch den fluidischen Kontakt zwischen einem Innenvolumen des Messrohrs 2 und einem Innenvolumen des Thermometers 1, welche für die hier gezeigte Darstellung durch die zweite Durchgangsbohrung 12b gewährleistet ist.

## Patentansprüche

1. Anordnung (7) zur Bestimmung und/oder Überwachung einer Temperatur eines Mediums (M) in einem Messrohr (2), umfassend ein Thermometer (1) für kryogene Anwendungen, wobei das Thermometer (1) einen Messeinsatz mit einem Temperatursensor und ein Schutzrohr zur Aufnahme des Messeinsatzes aufweist, und einen Befestigungseinsatz (6), wobei der Befestigungssatz zur Befestigung des Thermometers (1) in einem Rohrstutzen (3) des Messrohrs (2) ausgebildet ist, umfassend
- ein Halteelement (11) zur Befestigung des Thermometers (1) an dem Befestigungseinsatz (6), und
- eine Arretierung (8), welche dazu ausgestaltet ist, eine Rotationsbewegung relativ zum Messrohr (2) zu verhindern,
wobei zumindest eine Komponente des Befestigungseinsatzes (6) derart ausgestaltet und/oder angeordnet ist, dass der Befestigungseinsatz (6) in Richtung einer Längsachse des Rohrstutzens (3) derart beweglich ist, dass Temperatureffekte aufgrund unterschiedlicher Wärmausdehnungskoeffizienten von unterschiedlichen Komponenten des Thermometers kompensierbar sind.

2. Anordnung (7) nach Anspruch 1, wobei der Befestigungseinsatz (6) einen Grundkörper (13) mit einer Durchgangsöffnung zur Aufnahme des Thermometers (1) umfasst, wobei eine äußere Wandung des Grundkörpers (13) an die geometrischen Dimensionen einer inneren Wandung des Rohrstutzens (3) angepasst ist.

3. Anordnung (7) nach zumindest einem der vorherigen Ansprüche,
wobei der Befestigungssatz ein ringförmiges Federelement (9) umfasst, welches Federelement (9), insbesondere lösbar, in den Rohrstutzen (3) oder in den Grundkörper (13) einsetzbar ist.

4. Anordnung (7) nach zumindest einem der Ansprüche 1 bis 3 oder 2 bis 3,
wobei die Arretierung (8) ein längliches Führungselement aufweist, welches an einer Wandung des Rohrstutzens (3) oder des Grundkörpers (13) befestigt ist, und welche Arretierung (8) in eine Komponente des Befestigungseinsatzes (6) eingreift, wenn der Befestigungseinsatz (6) in den Rohrstutzen (3) eingebracht ist.

5. Anordnung (7) nach Anspruch 3 und 4,
wobei das Federelement (9) einen länglichen Schlitz (10) aufweist, und
wobei das Führungselement (8) derart an einer Wandung des Rohrstutzens (3) oder des Grundkörpers (13) befestigt ist, dass das Führungselement in den Schlitz (10) eingreift, wenn das Federelement (9) in dem Rohrstutzen (3) oder in dem Grundkörper (13) angeordnet ist.

6. Anordnung (7) nach zumindest einem der Ansprüche 1 bis 3
wobei die Arretierung (8) einen Gewindebolzen (16) umfasst.

7. Anordnung (7) nach Anspruch 6,
wobei der Grundkörper (13) eine ringförmige Bodenfläche (14) aufweist, an welche Bodenfläche (14) ein Stutzen (15) mit einem Innengewinde zur Aufnahme des Gewindebolzens (16) angebracht ist.

8. Anordnung (7) nach zumindest einem der vorherigen Ansprüche,
wobei das Halteelement (11) ein ringförmiges Element aufweist, in welchem das Thermometer (1) befestigt ist.

9. Anordnung (7) nach zumindest einem der Ansprüche 1 bis 7,
wobei das Halteelement (11) in Form eines zylindrischen Elements mit einer, insbesondere zentrischen, ersten Durchgangsbohrung (12a) ausgestaltet ist, in welcher ersten Durchgangsbohrung (12a) das Thermometer (1) befestigt ist, und wobei ein Außendurchmesser des zylindrischen Elements (11) an einen Innendurchmesser des Rohrstutzens (3) oder des Grundkörpers (13) angepasst ist.

10. Anordnung (7) nach Anspruch 9,
wobei das Halteelement (11) zumindest eine zweite Durchgangsbohrung (12b) zur Herstellung eines fluidischen Kontakts zwischen einem Innenvolumen innerhalb des Messrohrs (2) und einem Innenvolumen des Thermometers (1) umfasst.

11. Anordnung (7) nach zumindest einem der Ansprüche 1 bis 10, zumindest einem der Ansprüche 2 bis 10 oder zumindest einem der Ansprüche 4 bis 10,
wobei das Halteelement (11) kraftschlüssig und/oder stoffschlüssig mit dem Rohrstutzen (3), dem Grundkörper (13) oder dem ringförmigen Federelement (9) verbunden ist.

12. Anordnung (7) nach Anspruch 3 und 11,
wobei das Halteelement (11) einen Steg (10) umfasst, welcher Steg (10) das Haltelement (11) und das Federelement (9) verbindet.

13. Anordnung (7) nach den Ansprüchen 2, 9 und 11 oder 2, 6, 9 und 11,
wobei der Grundkörper (13) und das Halteelement (11) vermittels einer Schraubverbindung miteinander verbindbar sind, insbesondere umfasst das Haltelement (11) zumindest eine dritte Durchgangsbohrung (12c), wobei das Halteelement (11) und der Grundkörper (13) vermittels des Gewindebolzens (16) der Arretierung (8), mittels einer Schraube oder mittels eines weiteren Gewindebolzens miteinander verbindbar sind.

14. Anordnung nach zumindest einem der vorherigen Ansprüche,
umfassend einen Druckentnahmestutzen (17).

## Claims

1. An arrangement (7) for determining and/or monitoring a temperature of a medium (M) in a measuring tube (2), comprising a thermometer (1) for cryogenic applications, wherein the thermometer (1) has a measuring insert with a temperature sensor and a protective tube for mounting the measuring insert, and a mounting insert (6), wherein the mounting insert is configured to mount the thermometer (1) in a tube adapter (3) of the measuring tube (2), comprising
• a retaining element (11) for mounting the thermometer (1) on the mounting insert (6), and
• a locking mechanism (8), which is configured to prevent a rotational movement relative to the measuring tube (2),
wherein at least one component of the mounting insert (6) is configured and/or arranged in such a way that the mounting insert (6) can be moved toward a longitudinal axis of the tube adapter (3) in such a way that it is possible to compensate for temperature effects caused by different components of the thermometer having different coefficients of thermal expansion.

2. The arrangement (7) as claimed in claim 1, wherein the mounting insert (6) comprises a basic body (13) with an opening for mounting the thermometer (1), wherein an outer wall of the basic body (13) is adapted to the geometric dimensions of an inner wall of the tube adapter (3).

3. The arrangement (7) as claimed in at least one of the preceding claims,
wherein the mounting insert comprises an annular spring element (9), with it being possible to insert said spring element (9) into the tube adapter (3) or into the basic body (13), in particular such that it can be detached again.

4. The arrangement (7) as claimed in at least one of claims 1 to 3 or 2 to 3,
wherein the locking mechanism (8) has an elongated guide element, which is mounted on a wall of the tube adapter (3) or the basic body (13), and said locking mechanism (8) engaging in a component of the mounting insert (6) when the mounting insert (6) is inserted into the tube adapter (3).

5. The arrangement (7) as claimed in claims 3 and 4,
wherein the spring element (9) has an elongated slot (10), and
wherein the guide element (8) is mounted on a wall of the tube adapter (3) or the basic body (13) in such a way that the guide element engages in the slot (10) when the spring element (9) is arranged in the tube adapter (3) or in the basic body (13).

6. The arrangement (7) as claimed in at least one of claims 1 to 3, wherein the locking mechanism (8) comprises a threaded bolt (16).

7. The arrangement (7) as claimed in claim 6,
wherein the basic body (13) has an annular base area (14), to which base area (14) a connector (15) with an internal thread for mounting the threaded bolt (16) is fitted.

8. The arrangement (7) as claimed in at least one of the preceding claims,
wherein the retaining element (11) has an annular element in which the thermometer (1) is mounted.

9. The arrangement (7) as claimed in at least one of claims 1 to 7,
wherein the retaining element (11) is configured in the form of a cylindrical element with a first, in particular centric, through-hole (12a), in which first through-hole (12a) the thermometer (1) is mounted, and wherein an external diameter of the cylindrical element (11) is adapted to an internal diameter of the tube adapter (3) or the basic body (13).

10. The arrangement (7) as claimed in claim 9,
wherein the retaining element (11) comprises at least a second through-hole (12b) for establishing fluidic contact between an internal volume inside the measuring tube (2) and an internal volume of the thermometer (1).

11. The arrangement (7) as claimed in at least one of claims 1 to 10, at least one of claims 2 to 10, or at least one of claims 4 to 10,
wherein the retaining element (11) is connected to the tube adapter (3), the basic body (13), or the annular spring element (9) by means of a force-fit connection and/or a permanent material bond.

12. The arrangement (7) as claimed in claims 3 and 11,
wherein the retaining element (11) comprises a bar (10), said bar (10) linking the retaining element (11) and the spring element (9).

13. The arrangement (7) as claimed in claims 2, 9, and 11, or 2, 6, 9, and 11,
wherein the basic body (13) and the retaining element (11) can be connected to each other by means of a screw connection, in particular the retaining element (11) comprises at least a third through-hole (12c), wherein the retaining element (11) and the basic body (13) can be connected to each other by means of the threaded bolt (16) of the locking mechanism (8), by means of a screw, or by means of an additional threaded bolt.

14. The arrangement as claimed in at least one of the preceding claims, comprising a pressure relief connection (17).

## Revendications

1. Dispositif (7) destiné à la détermination et/ou à la surveillance d'une température d'un produit (M) dans un tube de mesure (2), lequel dispositif comprend un capteur de température (1) pour des applications cryogéniques, le capteur de température (1) présentant un insert de mesure avec une sonde de température et un protecteur pour recevoir l'insert de mesure, ainsi qu'un insert de fixation (6), l'insert de fixation étant conçu pour fixer le capteur de température (1) dans une tubulure (3) du tube de mesure (2),
lequel dispositif comprend
- un élément de retenue (11) destiné à la fixation du capteur de température (1) sur l'insert de mesure, et
- un dispositif d'arrêt (8), lequel est conçu pour empêcher un mouvement de rotation par rapport au tube de mesure (2),
au moins un composant de l'insert de fixation (6) étant conçu et/ou disposé de telle sorte que l'insert de fixation (6) est mobile dans la direction d'un axe longitudinal de la tubulure (3), de telle sorte que des effets de température dus à des coefficients de dilatation thermique différents de différents composants du capteur de température peuvent être compensés.

2. Dispositif (7) selon la revendication 1, pour lequel l'insert de fixation (6) comprend un corps de base (13) avec une ouverture de passage pour recevoir le capteur de température (1), une paroi extérieure du corps de base (13) étant adaptée aux dimensions géométriques d'une paroi intérieure de la tubulure (3).

3. Dispositif (7) selon au moins l'une des revendications précédentes,
pour lequel l'insert de fixation comprend un élément de ressort annulaire (9), lequel élément de ressort (9) peut être inséré, notamment de manière amovible, dans la tubulure (3) ou dans le corps de base (13).

4. Dispositif (7) selon au moins l'une des revendications 1 à 3 ou 2 à 3,
pour lequel le dispositif d'arrêt (8) comprend un élément de guidage allongé, lequel élément est fixé à une paroi de la tubulure (3) ou du corps de base (13), et lequel dispositif d'arrêt (8) s'engage dans un composant de l'insert de fixation (6) lorsque l'insert de fixation (6) est inséré dans la tubulure (3).

5. Dispositif (7) selon les revendications 3 et 4,
pour lequel l'élément de ressort (9) présente une fente allongée (10), et
pour lequel l'élément de guidage (8) est fixé à une paroi de la tubulure (3) ou du corps de base (13) de telle sorte que l'élément de guidage s'engage dans la fente (10) lorsque l'élément de ressort (9) est disposé dans la tubulure (3) ou dans le corps de base (13).

6. Dispositif (7) selon au moins l'une des revendications 1 à 3,
pour lequel le dispositif d'arrêt (8) comprend un boulon fileté (16).

7. Dispositif (7) selon la revendication 6,
pour lequel le corps de base (13) présente une surface de fond annulaire (14), surface de fond (14) sur laquelle est montée une tubulure (15) avec un filetage intérieur destiné à recevoir le boulon fileté (16).

8. Dispositif (7) selon au moins l'une des revendications précédentes,
pour lequel l'élément de retenue (11) comprend un élément annulaire dans lequel est fixé le capteur de température (1).

9. Dispositif (7) selon au moins l'une des revendications 1 à 7,
pour lequel l'élément de retenue (11) est réalisé sous la forme d'un élément cylindrique avec un premier trou traversant (12a), notamment centré, dans lequel premier trou traversant (12a) est fixé le capteur de température (1), et un diamètre extérieur de l'élément cylindrique (11) étant adapté à un diamètre intérieur de la tubulure (3) ou du corps de base (13).

10. Dispositif (7) selon la revendication 9,
pour lequel l'élément de retenue (11) comprend au moins un deuxième trou traversant (12b) destiné à établir un contact fluidique entre un volume intérieur du tube de mesure (2) et un volume intérieur du capteur de température (1).

11. Dispositif (7) selon au moins l'une des revendications 1 à 10, au moins l'une des revendications 2 à 10 ou au moins l'une des revendications 4 à 10,
pour lequel l'élément de retenue (11) est relié par adhérence et/ou par matière à la tubulure (3), au corps de base (13) ou à l'élément de ressort annulaire (9).

12. Dispositif (7) selon les revendications 3 et 11,
pour lequel l'élément de retenue (11) comprend une nervure (10), laquelle nervure (10) relie l'élément de retenue (11) et l'élément de ressort (9).

13. Dispositif (7) selon les revendications 2, 9 et 11 ou 2, 6, 9 et 11,
pour lequel le corps de base (13) et l'élément de retenue (11) peuvent être reliés l'un à l'autre au moyen d'une liaison par vis, l'élément de retenue (11) comprenant notamment au moins un troisième trou traversant (12c), l'élément de retenue (11) et le corps de base (13) pouvant être reliés l'un à l'autre au moyen du boulon fileté (16) du dispositif d'arrêt (8), au moyen d'une vis ou au moyen d'un autre boulon fileté.

14. Dispositif (7) selon au moins l'une des revendications précédentes,
lequel dispositif comprend une tubulure de détente (17).
